# EUROPÄISCHE PATENTSCHRIFT

(11) **EP 2 845 650 B1**
(45) Veröffentlichungstag und Bekanntmachung des Hinweises auf die Patenterteilung: **04.07.2018**
(21) Anmeldenummer: 14002878.8
(22) Anmeldetag: 19.08.2014
(51) Int. Cl.: B05B 1/30, B05B 9/01, F16K 1/12, B05B 12/00

(54) **Handventil und seine Verwendung**
Manual valve
Soupape manuelle

(30) Priorität: 29.08.2013 DE 202013007781 U; 30.08.2013 DE 202013007690 U
(43) Veröffentlichungstag der Anmeldung: 11.03.2015
(73) Patentinhaber: Suttner GmbH, 33818 Leopoldshöhe (DE)
(72) Erfinder: Hartmann, Lothar, 33813 Oerlinghausen (DE); Zunkel, Steffen, 33813 Oerlinghausen (DE)
(74) Vertreter: Von Rohr Patentanwälte Partnerschaft mbB

(56) Entgegenhaltungen:
- EP-A2- 1 656 997
- US-A- 1 159 015
- US-A- 2 281 142
- US-A- 2 457 993
- US-A1- 2002 148 862

## Beschreibung

Die Erfindung betrifft ein Handventil, insbesondere ein Handventil für Reinigungsarbeiten im Lebensmittelbereich, mit einer Längserstreckungsrichtung, einem Eingang für ein Fluid und einem Ausgang für das Fluid, wobei Eingang und Ausgang an gegenüberliegenden Enden des Handventils entlang der Längserstreckungsrichtung angeordnet sind, sowie eine Verwendung einer Reinigungsvorrichtung mit einem solchen Ventil.

Handventile sind aus dem Hochdruckbereich bekannt. Dort werden Sie vor allem bei Reinigungsarbeiten eingesetzt. Ein bekanntes Beispiel sind die handelsüblichen Hochdruckreinigungsgeräte, wie sie beispielsweise bei der Reinigung von Kraftfahrzeugen eingesetzt werden. Allerdings haben die Handventile bei diesen Anwendungen üblicherweise eine Pistolenform. Dies ist ergonomisch von Vorteil, wenn vom Körper weg auf eine gewisse Distanz gearbeitet wird, wie es beim Einsatz derartiger Hochdruckreinigungsgeräte üblich ist.

Bei Arbeiten, die auf eine geringere Distanz ausgeführt werden, erweist sich eine derartige Pistolengriffform jedoch oft als unergonomisch. Bei derartigen Arbeiten sind Handventile ergonomisch im Vorteil, die derart gegriffen werden können, dass die Hand die Längserstreckungsrichtung des Ventilkörpers umgibt. Dabei befindet sich der Eingang des Ventils regelmäßig an einem dem Daumen der Hand zugeordneten Ende des Ventils, während sich der Ausgang an dem entlang der Längserstreckung des Ventilkörpers gegenüberliegenden, der Handkante zugeordneten Ende des Ventils befindet.

Bei den in Rede stehenden Arbeiten, bei denen es sich beispielsweise um Reinigungsarbeiten im Lebensmittelbereich handeln kann, kommen häufig niedrigere Drücke zum Einsatz als bei beispielsweise der Reinigung von Kraftfahrzeugen. Um hohe Durchflussraten bei einer gleichzeitig kompakten Bauweise des Ventils zu ermöglichen, ist es notwendig, dass ein derartiges Ventil einen niedrigen Druckverlust aufweist. Dabei sind der Baugröße regelmäßig Grenzen gesetzt, da eine bequeme einhändige Bedienung ermöglicht werden sollte. Insbesondere sollte das Ventil auf bequeme Art und Weise einhändig umgreifbar sein. Dies wird von handelsüblichen Ventilen dieser Bauart, die selbstabschaltend gestaltet sind, das heißt beim Loslassen eines Betätigungselements von selbst schließen, nicht in ausreichender Weise geleistet.

In der Praxis wird sich daher häufig durch die Verwendung herkömmlicher Kugelhähne oder vergleichbarer Absperrarmaturen beholfen. Diese weisen jedoch den Nachteil auf, dass eine echte einhändige Bedienung nicht möglich ist. Zum Öffnen und Schließen des Hahnes muss regelmäßig die Hand, die nicht das Ventil hält, verwendet werden. Weiterhin bedingt die fehlende Selbstabschaltung ein Risikopotential. Wird beispielsweise das Handventil bei der Arbeit fallengelassen, so strömt das verwendete Fluid weiterhin ungehindert aus dem Handventil.

Die US 2002/0148862 A1, welche ein Handventil gemäß dem Oberbegriff von Anspruch 1 offenbart, offenbart eine selbstschließende Spritzpistole mit einem linearen Strömungspfad. Die Spritzpistole weist ein durchströmbares Ventilelement auf, wobei zum Öffnen der Spritzpistole das Ventilelement mittels eines Auslösehebels gegen die Spannkraft einer das Ventilelement umgebenden Feder vom Ventilsitz abhebbar ist. Die Feder ist an einem radialen hervorspringenden Abschnitt des Ventilelements axial gehalten.

Die EP 1 656 997 A2 offenbart ein Sprühventil mit einem Fluidpfad, wobei das Sprühventil einen hohlzylindrischen Ventilaufsatz zur gleitenden Aufnahme eines zylindrischen Ventilelements aufweist. Das Ventilelement weist einen Sitzflansch zur Aufnahme einer Spannfeder auf, so dass das Ventilelement bei geschlossenem Sprühventil gegen den Ventileinsatz verspannt ist.

Die US 2,457,993 A betrifft eine Sprühvorrichtung mit einem Grundkörper, wobei der Grundkörper ein Ventilsitz zur Aufnahme eines Ventilelements aufweist und wobei der Grundkörper auf einem Rohr axial zum Öffnen und/oder Schließen der Sprühvorrichtung gelagert ist.

Die US 2.281,142 A betrifft ein Kontrollventil zur Abgabe eines unter Druck stehenden Fluids. Das Ventil weist eine Zuführleitung auf, die über eine Hülse gesichert ist. Darüber hinaus ist ein Betätigungselement vorgesehen, dass eine Öffnung aufweist, durch die die Leitung geführt wird, wobei der Hebel zwischen der Hülse und einem Ventilkörper geklemmt ist und der Ventilkörper bzgl. der Leitung axial verschiebbar gelagert ist Im geschlossenen Zustand des Kontrollventils ist die Leitung gegenüber dem Ventilelement mittels einer Feder vorgespannt.

Die US 1.159,015 A betrifft eine Schlauchdüse mit einem flüssigkeitsführenden hohlzylindrischen Abschnitt, einem Ventilelement und einem gegenüber dem Abschnitt axial verschiebbar geführten Hohlkörper. Zwischen dem Abschnitt und dem Hohlkörper ist eine Feder angeordnet, deren Spannkraft die relative Lage des Körpers und des Abschnitts zueinander sichert

Der Erfindung liegt die Aufgabe zugrunde, ein Handventil sowie die Verwendung einer Reinigungsvorrichtung mit einem solchen Handventil anzugeben, das selbstabschaltend ist, eine einhändige Bedienung ermöglicht und/oder gleichzeitig auch bei niedrigen Drücken und hohen Durchflussmengen einen geringen Druckverlust aufweist

Die obige Aufgabe wird durch ein Handventil gemäß Anspruch 1 oder eine Verwendung gemäß Anspruch 15 gelöst. Vorteilhafte Weiterbildungen sind Gegenstand der Unteransprüche.

Vorschlagsgemäß weist das Handventil einen Dichtkolben, der zum Öffnen und/oder Schließen des Ventils entlang der Längserstreckungsrichtung beweglich ist und/oder der in der Offenstellung des Ventils von dem Fluid durchströmbar ist auf. Vorzugsweise ist dabei der Dichtkolben in der Offenstellung des Ventils entlang der Längserstreckungsrichtung durchströmbar. Dabei ist der Dichtkolben vorzugsweise rohrförmig ausgebildet. Die Form des Dichtkolbens ist insbesondere so gewählt, dass er in seinem Inneren durchströmt werden kann.

Durch diese räumliche Anordnung bzw. Ausgestaltung des Dichtkolbens wird es möglich, ein kompaktes Handventil zu bauen, welches eine günstige, d. h. druckverlustarme Führung der Fluidströmung entlang der Längserstreckungsrichtung des Handventils ermöglicht.

Gemäß einem weiteren Aspekt der vorliegenden Erfindung ist ein Betätigungselement vorgesehen. Bei dem Betätigungselement kann es sich beispielsweise um einen Hebel handeln. Das Betätigungselement ist vorzugsweise derart gestaltet, dass es gemeinsam mit dem Handventil umgriffen werden kann. Eine derartige Gestaltung ermöglicht es, das Handventil einhändig zu halten und gleichzeitig zu bedienen.

Gemäß einem weiteren Aspekt der vorliegenden Erfindung ist ein Dichtkolbengehäuse zur Aufnahme des Dichtkolbens vorgesehen. Das Dichtkolbengehäuse ermöglicht es, den darin aufgenommenen Dichtkolben in seiner Bewegung beim Öffnen und/oder Schließen des Handventils zu führen. Dabei ist vorteilhafterweise das Betätigungselement am Dichtkolbengehäuse schwenkbar gelagert. Die schwenkbare Anlenkung des Betätigungselements am Dichtkolbengehäuse ist vorteilhaft, da die bei der Betätigung des Betätigungselements entstehenden Reaktionskräfte auf diese Weise direkt ins Dichtkolbengehäuse eingeleitet werden.

Gemäß einem weiteren Aspekt der vorliegenden Erfindung greift das Betätigungselement an dem Dichtkolben an. Dadurch werden die auf das Betätigungselement ausgeübten Betätigungskräfte direkt auf den Dichtkolben übertragen. Vorzugsweise greift dabei das Betätigungselement an einer Gleitfläche des Dichtkolbens an. Der Angriff an einer Gleitfläche des Dichtkolbens ermöglicht es, eine Schwenkbewegung des Betätigungselements in einfacher Weise in eine lineare Bewegung des Dichtkolbens umzuwandeln.

Gemäß einem weiteren Aspekt der vorliegenden Erfindung greift das Betätigungselement beidseitig am Dichtkolben an. Ein derartiges beidseitiges Angreifen des Betätigungselements am Dichtkolben bewirkt eine symmetrische Krafteinleitung in den Dichtkolben. Hierdurch resultieren keine oder zumindest geringe Querkräfte auf die Gleitlagerung des Dichtkolbens, die aus der Einleitung der Betätigungskraft resultieren, wie es bei einer Krafteinleitung an einer Seite des Dichtkolbens unvermeidbar der Fall wäre.

Gemäß einem weiteren Aspekt der vorliegenden Erfindung greift das Betätigungselement mit Gleitelementen an den Dichtkolben an. Derartige Gleitelemente haben den Vorteil, dass Sie ein reibungsarmes Abgleiten des Betätigungselements am Dichtkolben, insbesondere an einer Gleitfläche des Dichtkolbens, ermöglichen. Dabei greift das Betätigungselement erfindungsgemäß mit Rollen als Gleitelementen an dem Dichtkolben an. Die Gleitfläche kann auch als sonstige Führungsfläche ausgebildet sein. Es ist also möglich und vorzugsweise nicht notwendig, dass die Gleitfläche zur gleitenden Führung vorgesehen ist.

Dabei weist das Betätigungselement vorzugsweise einen Griffbereich auf. Der Griffbereich ist der Bereich des Betätigungselements, der dazu ausgebildet ist, dass der Bediener an diesem Griffbereich angreift, um das Handventil zu öffnen.

Dabei ist das Betätigungselement vorzugsweise auf der dem Griffbereich gegenüberliegenden und/oder abgewandten Seite des Dichtkolbens am Handventil angelenkt. Eine derartige Ausgestaltung kann insbesondere dadurch erreicht werden, dass das Betätigungselement einen Befestigungsbereich aufweist. Dieser kann so gestaltet sein, dass er den Dichtkolben gabelförmig umgreift.

Gemäß einem weiteren Aspekt der vorliegenden Erfindung ist das Dichtkolbengehäuse zumindest im Wesentlichen rotationssymmetrisch gestaltet. Unter einer im Wesentlichen rotationssymmetrischen Gestaltung ist auch eine ansonsten rotationssymmetrische Gestaltung zu verstehen, bei der einzelne Abschnitte eine nicht rotationssymmetrische Gestaltung aufweisen können.

Die Abweichung von der rotationssymmetrischen Gestaltung hat dabei vorzugsweise funktionale Gründe. Beispielsweise können abgeflachte Flächen am Dichtkolbengehäuse vorgesehen sein, um den Angriff eines Werkzeugs bei der Montage oder Demontage des Handventils zu ermöglichen. Ansonsten ist eine rotationssymmetrische Form vorteilhaft im Hinblick auf die Fertigung eines derartigen Dichtkolbengehäuses.

Auch die Anlenkung des Betätigungselements kann eine Abweichung von der ansonsten rotationssymmetrischen Form zur Folge haben, wenn die Gestaltung des Dichtkolbengehäuses lokal an die Anlenkung des Betätigungselements angepasst wird. Eine solche Abweichung von der rotationssymmetrischen Form ändert ebenfalls nichts daran, dass ein entsprechend gestaltetes Dichtkolbengehäuse als ein zumindest im Wesentlichen rotationssymmetrisch gestaltetes Dichtkolbengehäuse zu verstehen ist.

Gemäß einem weiteren Aspekt der vorliegenden Erfindung weist das Dichtkolbengehäuse mindestens eine, vorzugsweise zwei, Aussparungen auf. Die Aussparungen sind derart gestaltet, dass sie den Angriff des Betätigungselements an dem Dichtkolben ermöglichen. Hierdurch lässt sich die Betätigung des Dichtkolbens innerhalb des Dichtkolbengehäuses in einfacher Weise und mit einer geringen Zahl an benötigten Bauteilen realisieren.

Gemäß einem weiteren Aspekt der vorliegenden Erfindung weist das Handventil stromab des Dichtkolbengehäuses ein Ausgangsgehäuse auf. Dabei kann das Ausgangsgehäuse mit dem Dichtkolbengehäuse über eine lösbare Verbindung, beispielsweise eine Verschraubung, verbunden sein. Durch eine derartige mehrteilige Gehäusegestaltung lässt sich das Handventil in einfacher Weise montieren und/oder demontieren.

Dabei ist gemäß einem weiteren Aspekt der vorliegenden Erfindung der Ventilsitz dem Ausgangsgehäuse zugeordnet. Insbesondere kann der Ventilsitz an das Ausgangsgehäuse angeformt sein. Auf diese Weise wird eine einfache Montage und Demontage ermöglicht. Bei der Trennung von Ausgangsgehäuse und Dichtkolbengehäuse wird auf diese Weise auch der Dichtkolben vom Ventilsitz getrennt, so dass die Dichtflächen zugänglich werden. Das Ausgangsgehäuse und das Dichtkolbengehäuse können jedoch auch einstückig oder auf sonstige Weise gebildet sein.

Gemäß einem weiteren Aspekt der vorliegenden Erfindung ist eine Ventilsitzdichtung vorgesehen. Diese ist vorzugsweise dem Ausgangsgehäuse zugeordnet. Die Ventilsitzdichtung ermöglicht ein dichtes Verschließen des Ventils. Durch die Zuordnung der Ventilsitzdichtung zum Ausgangsgehäuse lässt sich die Ventilsitzdichtung in einfacher Weise montieren und demontieren.

Gemäß einem weiteren Aspekt der vorliegenden Erfindung ist das Handventil dabei derart gestaltet, dass der Dichtsitzdurchmesser mehr als 3 mm, vorzugsweise mehr als 5 mm und/oder weniger als 20 mm, vorzugsweise weniger als 17 mm, insbesondere etwa 13 mm, ist. Der Dichtsitzdurchmesser ist dabei der mittlere Durchmesser des ringförmigen Bereichs mit dem der Dichtkolben an die Ventilsitzdichtung angrenzt und somit abdichtet.

Gemäß einem weiteren Aspekt der vorliegenden Erfindung ist ein Eingangsgehäuse stromaufwärts des Dichtkolbengehäuses vorgesehen. Das Eingangsgehäuse ist vorzugsweise mit einem Dichtkolbengehäuse verbunden. Der Vorteil dieser Ausführung ist eine leichte Montierbarkeit und/oder Demontierbarkeit des Handventils.

Gemäß einem weiteren Aspekt der vorliegenden Erfindung weist der Dichtkolben eine ausgangsseitige Dichtfläche an seiner Außenkontur auf. Die bevorzugt zylindrische Dichtfläche ermöglicht es den Kolben gleichzeitig sowohl auf dieser Fläche abzudichten als auch mittels dieser Fläche in seiner Bewegung beim Öffnen und/oder Schließen des Handventils zu führen. Vorzugsweise ist die ausgangsseitige Dichtfläche durch Dichtelemente im Dichtkolbengehäuse geführt. Dabei sind die Dichtelemente vorzugsweise O-Ringe.

Gemäß einem weiteren Aspekt der vorliegenden Erfindung weist der Dichtkolben eine eingangsseitige zylindrische Dichtfläche an seiner Außenkontur auf. Eine derartige Fläche hat ebenfalls eine doppelte Funktion als Dichtfläche und Führung des Dichtkolbens in seiner Bewegung beim Öffnen und/oder Schließen des Handventils. Dabei ist vorzugsweise die eingangsseitige zylindrische Dichtfläche über ein Dichtelement geführt. Vorzugsweise ist das Dichtelement ein O-Ring.

Gemäß einem weiteren Aspekt der vorliegenden Erfindung ist ein Dämpfer zur Dämpfung der Geschwindigkeit des Schließvorgangs des Handventils vorgesehen. Ein derartiger Dämpfer bewirkt ein langsames Schließen und verhindert somit eine abrupte Unterbrechung des Fluidstroms. Dies hat u.a. den Vorteil, dass Druckstöße in einer zum Handventil führenden Leitung vermieden werden.

Dabei ist der Dämpfer vorteilhafterweise dem Gehäuse und/oder dem Betätigungselement zugeordnet. Im Gehäuse und/oder im Betätigungselement lässt sich ein derartiger Dämpfer anbringen, ohne dass sich der Bauraumbedarf des Dämpfers negativ auf den Aufbau des Ventils ausüben kann. Dabei ist der Dämpfer insbesondere in das Gehäuse und/oder in das Betätigungselement integriert.

Gemäß einem weiteren Aspekt der vorliegenden Erfindung ist das Handventil derart gestaltet, dass der Dichtkolben ein Bestandteil des Dämpfers ist. Eine entsprechende Gestaltung des Handventils, insbesondere des Dämpfers und des Dichtkolbengehäuses, ermöglicht es, den Dichtkolben als Bestandteil des Dämpfers zu nutzen.

Dabei wird die Tatsache ausgenutzt, dass durch die Bewegung des Dichtkolbens beim Schließen des Ventils ein, vorzugsweise ringförmiger, Zwischenraum zwischen Dichtkolben und vorzugsweise Dichtkolbengehäuse verkleinert wird. Durch eine geeignete Gestaltung des Handventils, beispielsweise durch ein hierfür vorgesehenes Drosselventil, wird es ermöglicht, dass ein im Zwischenraum eingeschlossenes Medium, wie beispielsweise Luft, aus diesem Zwischenraum kontrolliert entweichen kann. Durch das kontrollierte Entweichen des Mediums bzw. der Luft aus dem Zwischenraum wird der gewünschte Dämpfungseffekt erzielt.

Gemäß einem weiteren Aspekt der vorliegenden Erfindung ist ein Rückstellelement zum Schließen des Handventils vorgesehen. Ein derartiges Rückstellelement ermöglicht eine Selbstabschaltung des Handventils. Dabei ist das Rückstellelement vorzugsweise ringförmig um den Dichtkolben angeordnet. Eine derartige ringförmige Anordnung des Rückstellelements um den Dichtkolben ermöglicht es, eine die Rückstellbewegung treibende Kraft in den Dichtkolben derart einzuleiten, dass keine Querkräfte erzeugt werden und die Rückstellkräfte möglichst nur in der Bewegungsrichtung des Dichtkolbens wirken. Das Rückstellelement weist dabei eine Mehrzahl Federn auf. Die Federn sind insbesondere um den Umfang des Dichtkolbens verteilt angeordnet. Die um den Umfang verteilte Anordnung ermöglicht eine gleichmäßig über den Umfang des Dichtkolbens verteilte Einleitung der Rückstellkräfte bei gleichzeitig geringem Platzbedarf.

Die genannten Aspekte der Erfindung können unabhängig voneinander und/oder in einer beliebigen Kombination miteinander sowie auch in beliebigen Kombinationen mit weiteren Aspekten und Merkmalen der vorliegenden Erfindung verwirklicht werden.

Weitere Merkmale, Vorteile und Aspekte der vorliegenden Erfindung ergeben sich aus den Ansprüchen und der nachfolgenden Beschreibung bevorzugter Ausführungsformen anhand der Zeichnungen. Es zeigt:
- Fig. 1: einen schematischen Schnitt eines Handventils gemäß der vorliegenden Erfindung,
- Fig. 2: den Schnitt des Handventils aus Fig. 1 bei geöffnetem Handventil,
- Fig. 3: einen Schnitt eines Handventils gemäß der vorliegenden Erfindung mit einer alternativen Dämpferanordnung,
- Fig. 4: einen Schnitt des Handventils aus Fig. 3 bei geschlossenem Handventil,
- Fig. 5: eine Explosionsdarstellung eines Handventils gemäß der vorliegenden Erfindung,
- Fig. 6: eine Teilexplosionsdarstellung eines Handventils gemäß der vorliegenden Erfindung,
- Fig. 7: eine perspektivische Ansicht eines Handventils gemäß der vorliegenden Erfindung,
- Fig. 8: eine Seitenansicht des Handventils aus Fig. 7,
- Fig. 9: eine perspektivische Ansicht eines weiteren Handventils gemäß der vorliegenden Erfindung,
- Fig. 10: eine Seitenansicht des Handventils aus Fig. 9,
- Fig. 11: eine perspektivische Ansicht eines Dichtkolbens.

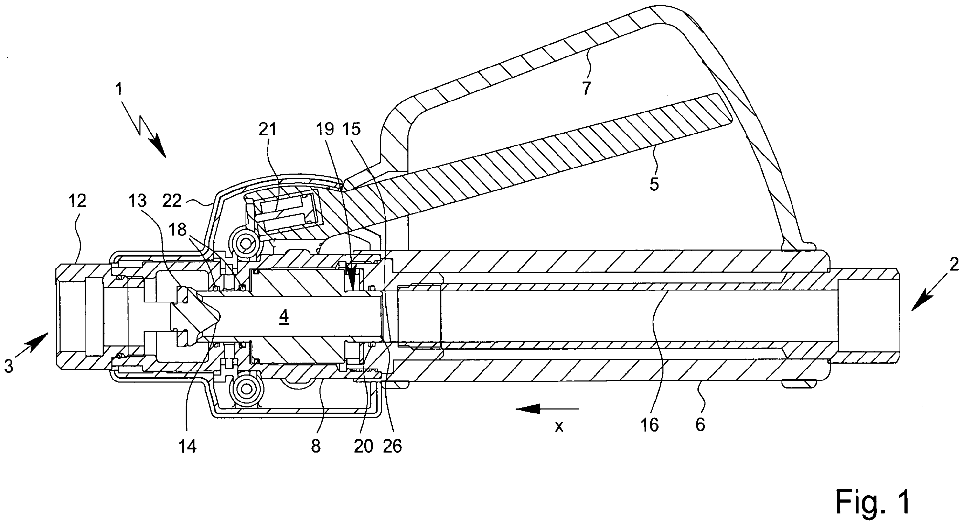

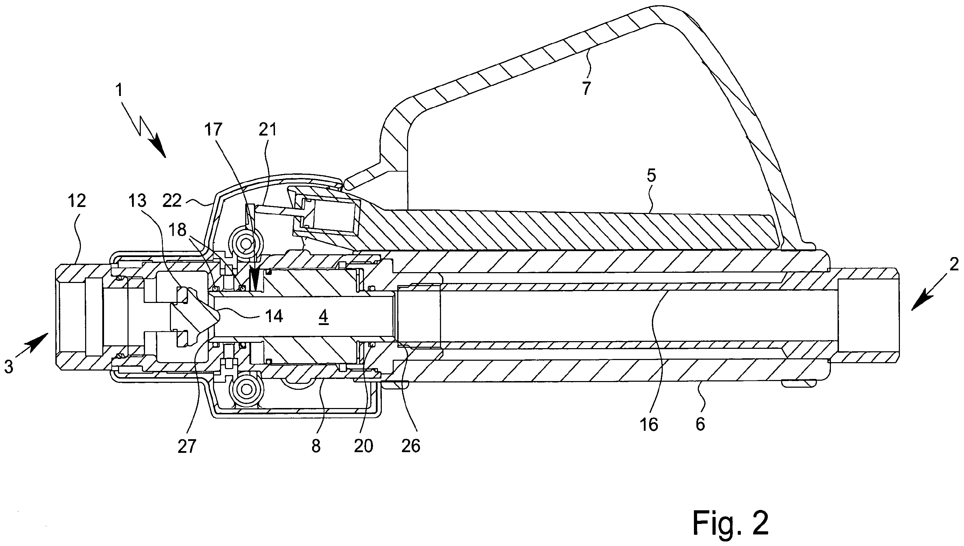

Das in Fig. 1 dargestellte Handventil 1 weist einen Eingang 2 für ein Fluid und einen Ausgang 3 für ein Fluid auf. Eingang 2 und Ausgang 3 sind an gegenüberliegenden Enden des Handventils 1 entlang dessen Längserstreckungsrichtung X angeordnet. Das Handventil 1 weist einen Dichtkolben 4 auf. Der Dichtkolben 4 ist entlang der Längserstreckungsrichtung X beweglich. In der Offenstellung des Handventils 1, die in der Fig. 2 dargestellt ist, ist der Dichtkolben 4 von dem Fluid entlang der Längserstreckungsrichtung X durchströmbar.

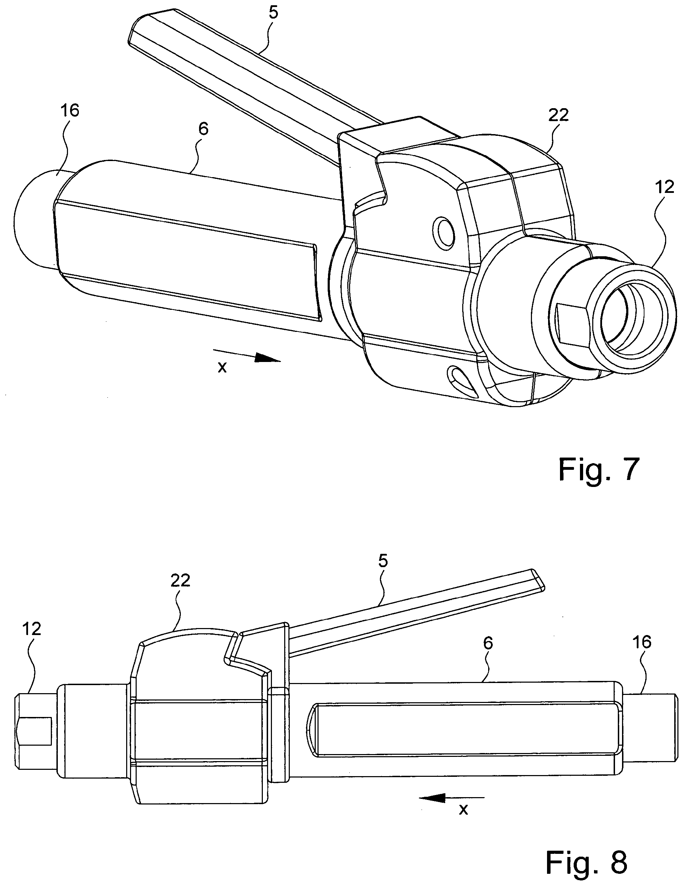

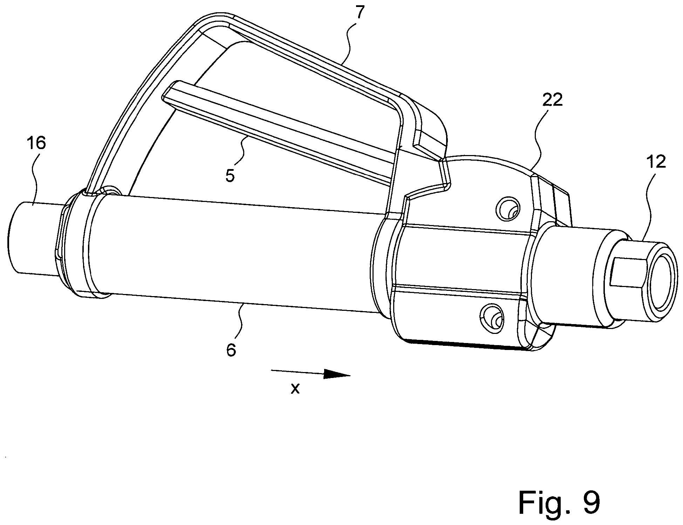

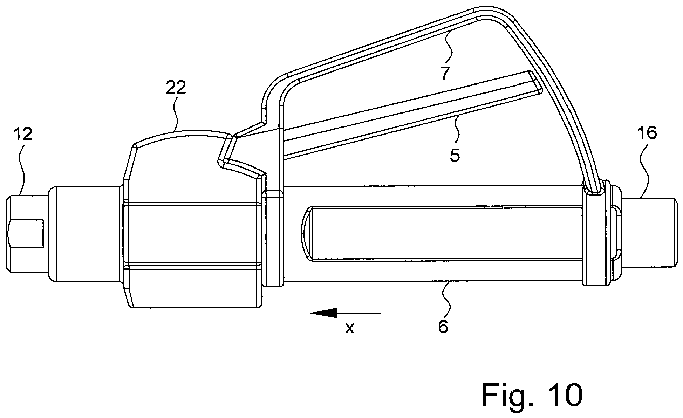

Zur Betätigung des Handventils 1 ist ein Betätigungselement 5 vorgesehen. Das Betätigungselement 5 ist derart gestaltet, dass es gemeinsam mit dem Handventil 1 umgriffen werden kann. Im Hinblick auf die in den Fig. 1 und 2 dargestellte beispielhafte Ausführungsform des erfindungsgemäßen Handventils 1 bedeutet dies, dass die Hand das Betätigungselement 5 sowie ein Gehäuseteil 6 umgreift. Dabei weist das beispielhafte erfindungsgemäße Handventil 1, das in den Fig. 1 und 2 dargestellt ist, einen Schutzbügel 7 auf (vgl. auch Fig. 7 bis 10). Beim Umgreifen des Handventils 1 greifen die Finger des Bedieners zwischen dem Betätigungselement 5 und dem Schutzbügel 7 hindurch. Infolge werden die Finger bei der Arbeit mit dem Handventil 1 durch den Schutzbügel 7 geschützt.

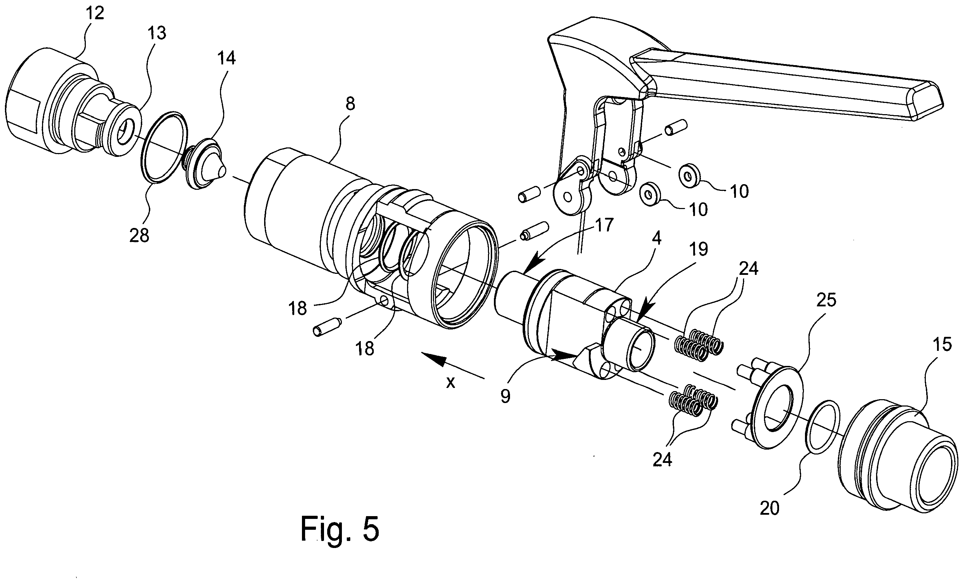

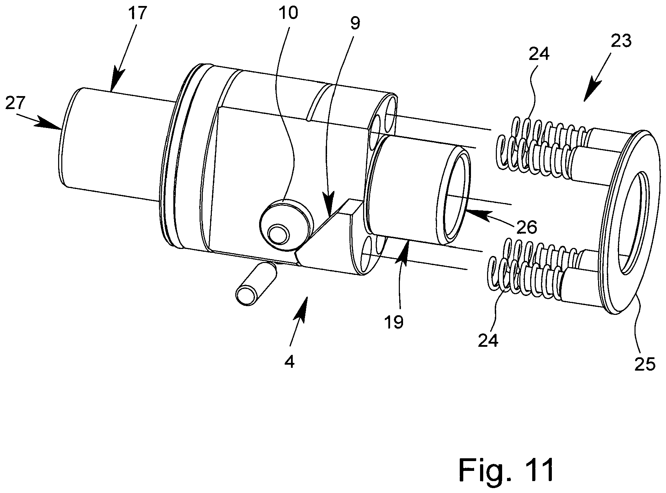

Der Dichtkolben 4 ist in einem Dichtkolbengehäuse 8 aufgenommen. Am Dichtkolbengehäuse 8 ist das Betätigungselement 5 schwenkbar gelagert. Dies ist in den Schnittdarstellungen der Fig. 1 bis 4 aufgrund der Lage der Schnittebenen nicht dargestellt, kann aber anhand der Fig. 5 und 6 sowie 11 nachvollzogen werden. Das Betätigungselement 5 greift an den Gleitflächen 9 des Dichtkolbens 4 zu beiden Seiten des Dichtkolbens 4 am Dichtkolben 4 an. Hierfür weist das Betätigungselement 5 Gleitelemente 10 auf. Diese sind erfindungsgemäß als Rollen ausgebildet. Der Angriff der Gleitelemente 10 an den Gleitflächen 9 des Dichtkolbens 4 findet im Bereich von Ausnehmungen 11, die in dem im Wesentlichen rotationssymmetrischen Dichtkolbengehäuse 8 vorgesehen sind, statt. Das Betätigungselement 5 weist einen gabelförmig gestalteten Befestigungsbereich auf, der den Dichtkolben 4 und das Dichtkolbengehäuse 8 gabelförmig umgreift.

Stromab des Dichtkolbengehäuses 8 weist das Handventil 1 ein Ausgangsgehäuse 12 auf. An das Ausgangsgehäuse 12 ist der Ventilsitz 13 vorgesehen, vorzugsweise angeformt. An dem Ventilsitz 13 ist eine Ventilsitzdichtung 14 vorgesehen. Durch die Befestigung der Ventilsitzdichtung 14 an dem Ventilsitz 13, der wiederum an das Ausgangsgehäuse 12 angeformt ist, ist die Ventilsitzdichtung 14 dem Ausgangsgehäuse 12 zugeordnet.

Weiterhin weist das Handventil 1 ein Eingangsgehäuse 15 stromaufwärts des Dichtkolbengehäuses 8 auf. Das Eingangsgehäuse 15 dient gleichzeitig auch der Lagerung und Führung des Dichtkolbens 4. Stromaufwärts schließt sich an das Eingangsgehäuse 15 ein Rohrstück 16 an. Dieses Rohrstück 16 stellt das druckführende Bauteil des Handventils 1 in Verlängerung des Eingangsgehäuses 15 dar.

Das so gestaltete Handventil 1 weist einen Strömungsweg auf, der zumindest im Wesentlichen parallel zu dessen Längserstreckungsrichtung X verläuft. Das Fluid tritt am Eingang 2 in das Rohrstück 16 ein und strömt dann gradlinig durch das Eingangsgehäuse 15 in den Dichtkolben 4. Bei geöffnetem Handventil 1 wird die Fluidströmung durch die Ventilsitzdichtung 14 aufgrund derer konisch entgegen der Strömungsrichtung spitz zulaufenden Form abgelenkt und um die Ventilsitzdichtung 14 und den Ventilsitz 13 herumgelenkt. Durch Fenster tritt das Fluid dann in das Ausgangsgehäuse 12 ein. Auf diese Weise wird der Ventilsitz 13 von dem Fluid umströmt.

Das Fluid verlässt das Handventil 1 durch den Ausgang 3. Lediglich beim Umströmen der Ventilsitzdichtung 14 und des Ventilsitzes 13 wird die Strömung aus einer ansonsten zur Längserstreckungsrichtung X des Handventils 1 parallelen Strömungsführung geringfügig ausgelenkt. Diese im Wesentlichen zur Längserstreckungsrichtung X parallele Führung der Fluidströmung trägt wesentlich zum geringen Druckverlust des Handventils 1 bei.

Der Dichtkolben 4 weist an seiner Außenkontur eine ausgangsseitige zylindrische Dichtfläche 17 auf. Mit dieser Dichtfläche 17 wirken Dichtelemente 18 zusammen. Die Dichtelemente 18 sind in den gezeigten Ausführungsformen als O-Ringe ausgeführt. Durch die Dichtelemente 18 wird nicht nur der Dichtkolben 4 gegen das Dichtkolbengehäuse 8 abgedichtet, sondern der Dichtkolben 4 wird auch gleichzeitig in seiner Bewegung beim Öffnen und/oder Schließen des Handventils 1 geführt.

Weiterhin weist der Dichtkolben 4 an seiner Außenkontur eine eingangsseitige zylindrische Dichtfläche 19 auf. Ein Dichtelement 20 in Gestalt eines O-Rings dichtet die eingangsseitige zylindrische Dichtfläche 19 gegen das Eingangsgehäuse 15 ab. Durch das Dichtelement 20 wird der Dichtkolben 4 in seiner Bewegung beim Öffnen und/oder Schließen des Handventils 1 im Eingangsgehäuse geführt.

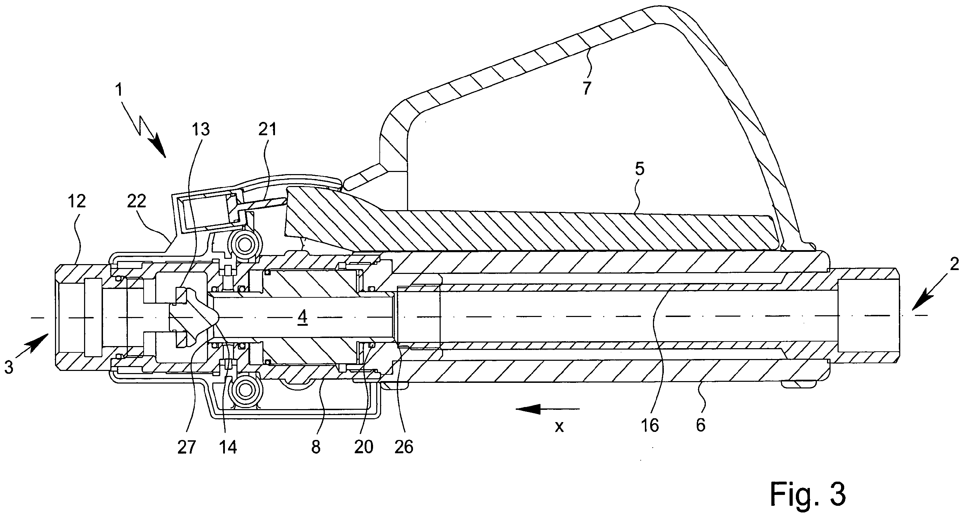

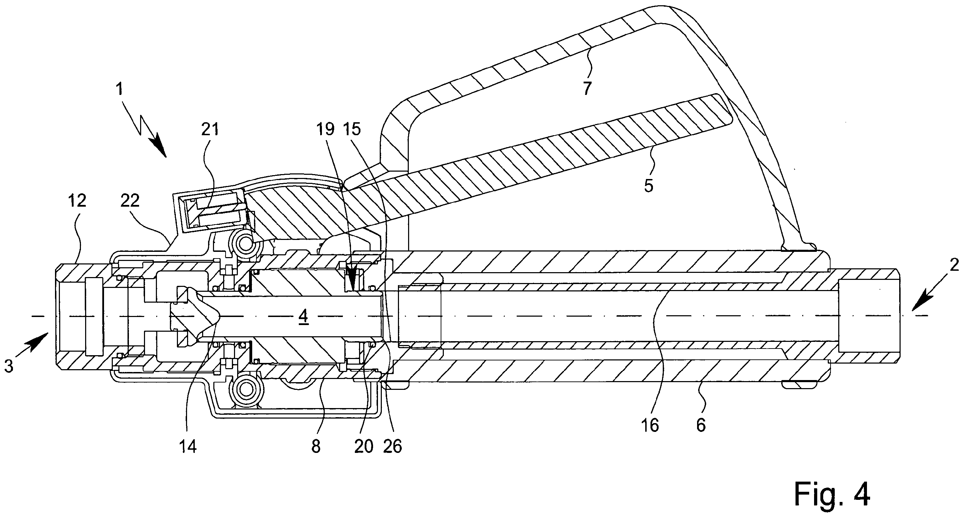

Die in den Fig. 1 und 2 dargestellte Ausführungsform des erfindungsgemäßen Handventils 1 weist darüber hinaus einen im Betätigungselement 5 integrierten Dämpfer 21 auf. Dieser Dämpfer 21 dämpft die Bewegung des Betätigungselements 5 und damit die Geschwindigkeit des Schließvorgangs des Handventils 1. Bei der in den Fig. 3 und 4 dargestellten Ausführungsform des erfindungsgemäßen Handventils 1 ist der Dämpfer 21 nicht in das Betätigungselement 5 sondern in das Gehäuse, nämlich in ein Gehäuseteil 22 integriert.

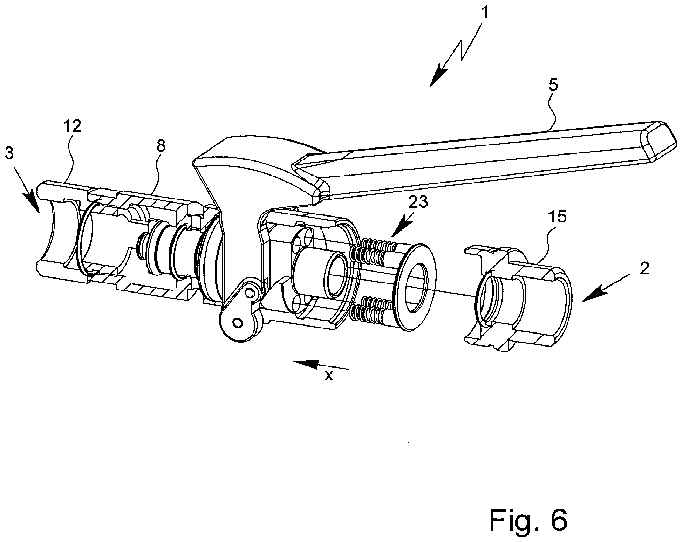

Das Handventil 1 weist ein Rückstellelement 23 auf (vgl. Fig. 5 und 6). Das Rückstellelement 23 dient zum Schließen des Handventils 1. Das Rückstellelement 23 weist eine Mehrzahl Federn 24 auf. Hierdurch wird in vorteilhafter Weise eine kompakte Bauform erreicht. Insbesondere führt die Realisierung des Rückstellelements 23 mit mehreren Federn 24 dazu, dass im Bereich der Gleitflächen 9 kein Lager für das Rückstellelement erforderlich ist. Im Darstellungsbeispiel gem. Fig. 5 sind Federn 24 im Darstellungsbeispiel paarweise gegenüberliegend und/oder sind ringförmig um den Umfang des Dichtkolbens 4 verteilt angeordnet. Ein Halteelement 25 dient dazu, die Federn 24 in ihrer Position zu halten. Der Dichtkolben 4 ist in einem mittleren Abschnitt derart gestaltet, dass er eine Verdickung aufweist. Die Verdickung ermöglicht den Angriff des Rückstellelements 23. Im gezeigten Beispiel werden die Federn 24 zumindest teilweise in der Verdickung aufgenommen. Der mittlere Durchmesser des vorzugsweise im Wesentlichen rotationssymmetrisch gestalteten Dichtkolbens 4 beträgt dabei im Bereich der Verdickung vorzugsweise mindestens das 1,3-fache des Dichtsitzdurchmessers und/oder des Durchmessers der ausgangsseitigen Dichtfläche 17 und/oder der eingangsseitigen Dichtfläche 19.

Der Dichtkolben 4 ist bevorzugt druckausgeglichen ausgelegt. Dies bietet Vorteile bei dem bevorzugten Arbeitsdruck des Handventils 1 von mehr als 8 Bar, vorzugsweise mehr als 15 Bar, insbesondere mehr als 20 Bar und/oder weniger als 60 Bar, vorzugsweise weniger als 55 Bar, insbesondere weniger als 50 Bar, da eine unbeabsichtigte Bewegung des Dichtkolbens 4 in Öffnungs- bzw. Schließstellung durch den Fluiddruck verhindert wird.

Vorzugsweise sind die Oberflächen des Dichtkolbens, auf die der Druck des Fluids eine Kraft in eine Richtung bewirkt, die der Bewegungsrichtung des Dichtkolbens 4 beim Öffnen und/oder Schließen entspricht, derart gestaltet, dass keine Bewegung des Dichtkolbens durch den Druck des Fluids bewirkt wird. Diese Oberflächen können möglichst klein gestaltet sein, um auftretende Kräfte gering zu halten. Ferner ist bevorzugt, dass die wirksamen Angriffsflächen für die Druckkräfte in beide Bewegungsrichtungen des Kolbens zumindest im Wesentlichen gleich groß sind.

Bei dem Dichtkolben 4 gemäß des Ausführungsbeispiels betrifft dies die dem Eingang zugewandte ringförmige Fläche 26 und die dem Ausgang 2 bzw. dem Ventilsitz 14 zugewandte ringförmige Fläche 27. Vorzugsweise sind sowohl bei geöffnetem wie auch bei geschlossenem Ventil die durch den Fluiddruck bedingten, in Bewegungsrichtung des Dichtkolbens 4 wirkenden Kräfte in beiden möglichen Bewegungsrichtungen des Dichtkolbens 4 zumindest im Wesentlichen gleich groß. Hierzu kann eine Kante der Dichtfläche 27, die ringförmig an der Ventilsitzdichtung 14 anliegt, so angeordnet sein, dass sich zum Inneren des Dichtkolbens 4 hin eine konische Schrägfläche ergibt, an der der Fluiddruck mit einer Kraftkomponente in der Bewegungsrichtung des Dichtkolbens 4 beim Öffnen des Handventils 1 angreifen kann, auch wenn das Handventil 1 geschlossen ist. Dies bedeutet, die dem Fluiddruck ausgesetzten in Bewegungsrichtung des Dichtkolbens 4 projizierten Flächen sind für beide Bewegungsrichtungen in etwa gleich groß gewählt.

Die dem Eingang 2 zugewandte ringförmige Fläche 26 des Dichtkolbens 4 ist dabei so gestaltet, dass die auf sie wirkende, durch den Fluiddruck bedingte Kraft in die Bewegungsrichtung des Dichtkolbens 4 beim Schließen des Handventils 1 in etwa der Kraft entspricht, die der Fluiddruck auf die dem Ausgang 3 zugewandte ringförmige Fläche 27 des Dichtkolbens 4 in deren innerem konischen Bereich in entgegensetzter Richtung ausübt.

Die ringförmige Fläche 27 des Dichtkolbens 4, die bei geschlossenem Handventil 1 an der Ventilsitzdichtung 14 anliegt, weist vorzugsweise neben dem zum Inneren des Dichtkolbens orientierten inneren konischen Bereich auch eine zum äußeren des Dichtkolbens 4 orientierte Fase auf. Bei geöffnetem Handventil 1 wirkt der Fluiddruck sowohl auf die Fase wie auch auf den inneren konischen Bereich. Bei geschlossenem Handventil 1 wirkt der Fluiddruck nur auf den inneren konischen Bereich. Werden die Verhältnisse der ringförmigen Fläche 27 und der ringförmigen Fläche 26 so gewählt, dass der Dichtkolben 4 bei geöffnetem Handventil 1 druckausgeglichen ist, so entsteht auf diese Weise bei geschlossenem Handventil 1 eine leichte resultierende Kraft in Schließrichtung des Dichtkolbens 4. Aus dieser resultiert dann ein definierter Druckpunkt beim Öffnen des Ventils. Dies verbessert zum einen die Bedienbarkeit, zum anderen wird das Ventil durch die resultierende Kraft zusätzlich geschlossen gehalten und so die Betriebssicherheit erhöht.

Besonders bevorzugt ist die auf den Dichtkolben 4 durch den Fluiddruck in Bewegungsrichtung wirkende Kraft im geöffneten und im geschlossenen Zustand des Handventils 1 zumindest im Wesentlichen gleich. Hierzu kann die quer zur Bewegungsrichtung angeordnete Oberfläche des Dichtkolbens 4 mit dem unter Druck stehenden Fluid in Öffnungsstellung und Schließstellung zumindest im Wesentlichen in gleicher Weise in Wirkzusammenhang stehen. Dies kann dadurch erreicht werden, dass lediglich eine äußere Kante der ausgangsseitigen Dichtfläche zum Schließen an die Ventilsitzdichtung 14 anlegbar ist.

Das Gehäuse der in den Figuren gezeigten Ausführungsformen ist in druckführende und nicht druckführende Gehäuseteile aufgeteilt. Die druckführenden Gehäuseteile sind das Rohrstück 16, das Eingangsgehäuse 15, das Dichtkolbengehäuse 8 und das Ausgangsgehäuse 12. Diese sind im Wesentlichen rotationssymmetrisch gestaltet, was vorteilhaft im Hinblick auf die Fertigung der Gehäuse und die Aufnahme der durch den Fluiddruck bedingten Kräfte ist. Umgeben werden sie durch die Gehäuseteile 6 und 22. Diese Gehäuseteile sind nicht druckführend, wodurch bei der Gestaltung dieser Gehäuseteile größere Freiheitsgrade bei der Gestaltung der Form und der Auswahl der verwendeten Werkstoffe bestehen.

### Bezugszeichenliste:

- 1: Handventil
- 2: Eingang
- 3: Ausgang
- 4: Dichtkolben
- 5: Betätigungselement
- 6: Gehäuseteil
- 7: Schutzbügel
- 8: Dichtkolbengehäuse
- 9: Gleitflächen
- 10: Gleitelemente
- 11: Ausnehmungen
- 12: Ausgangsgehäuse
- 13: Ventilsitz
- 13a: Fenster
- 14: Ventilsitzdichtung
- 15: Eingangsgehäuse
- 16: Rohrstück
- 17: ausgangsseitige Dichtfläche
- 18: Dichtelemente
- 19: eingangsseitige Dichtfläche
- 20: Dichtelement
- 21: Dämpfer
- 22: Gehäuseteil
- 23: Rückstellelement
- 24: Federn
- 25: Halteelement
- 26: dem Eingang zugewandte Fläche
- 27: dem Ausgang zugewandte Fläche
- 28: Dichtelement
- X: Längserstreckungsrichtung

## Patentansprüche

1. Handventil (1), insbesondere für Reinigungsarbeiten im Lebensmittelbereich, mit einer Längserstreckungsrichtung (X), einem Eingang (2) für ein Fluid und einem Ausgang (3) für das Fluid, wobei der Eingang (2) und der Ausgang (3) an gegenüberliegenden Enden des Handventils (1) entlang der Längserstreckungsrichtung (X) angeordnet sind,
wobei das Handventil (1) einen Dichtkolben (4) aufweist, wobei der Dichtkolben (4) zum Öffnen und/oder Schließen des Handventils (1) entlang der Längserstreckungsrichtung (X) beweglich ist und/oder wobei der Dichtkolben (4) in der Offenstellung des Handventils (1) von dem Fluid, vorzugsweise entlang der Längserstreckungsrichtung (X), durchströmbar ist, und
wobei ein Betätigungselement (5) zur Betätigung des Handventils (1) vorgesehen ist,
**dadurch gekennzeichnet,**
**dass** das Betätigungselement (5) mit Rollen als Gleitelemente (10) an den Dichtkolben (4) angreift, so dass ein reibungsarmes Abgleiten des Betätigungselements (5) an einer Gleitfläche (9) des Dichtkolbens (4) ermöglicht wird.

2. Handventil nach Anspruch 1, **dadurch gekennzeichnet, dass** ein Rückstellelement (23) zum Schließen des Handventils (1) vorgesehen ist, vorzugsweise wobei das Rückstellelement (23) eine Mehrzahl Federn (24) aufweist; und/oder
dass das Betätigungselement (5) so ausgebildet ist, dass es gemeinsam mit dem Handventil (1) umgreifbar ist.

3. Handventil nach einem der vorhergehenden Ansprüche, **dadurch gekennzeichnet, dass** das Betätigungselement (5) an der Gleitfläche (9) des Dichtkolbens (4), vorzugsweise beidseitig, angreift.

4. Handventil nach einem der vorhergehenden Ansprüche, **dadurch gekennzeichnet, dass** ein Dichtkolbengehäuse (8) zur Aufnahme des Dichtkolbens (4) vorgesehen ist.

5. Handventil nach den Ansprüchen 2 und 4, **dadurch gekennzeichnet, dass** das Betätigungselement (5) am Dichtkolbengehäuse (8) schwenkbar gelagert ist.

6. Handventil nach Anspruch 4 oder 5, **dadurch gekennzeichnet, dass** das Dichtkolbengehäuse (8) zumindest im Wesentlichen rotationssymmetrisch gestaltet ist, und/oder dass das Dichtkolbengehäuse (8) mindestens eine Aussparung (11), vorzugsweise zwei Aussparungen (11), aufweist, die derart gestaltet ist/sind, dass sie den Angriff des Betätigungselements (5) an dem Dichtkolben (4) ermöglicht/ermöglichen.

7. Handventil nach einem der Ansprüche 4 bis 6, **dadurch gekennzeichnet, dass** das Handventil (1) stromab des Dichtkolbengehäuses (8) ein Ausgangsgehäuse (12) aufweist, insbesondere wobei der Ventilsitz (13) dem Ausgangsgehäuse (12) zugeordnet, insbesondere an dieses angeformt, ist und/oder insbesondere wobei eine Ventilsitzdichtung (14) vorgesehen ist, die vorzugsweise dem Ausgangsgehäuse (12) zugeordnet ist.

8. Handventil nach einem der Ansprüche 4 bis 7, **dadurch gekennzeichnet, dass** ein Eingangsgehäuse (15) stromaufwärts des Dichtkolbengehäuses (8) vorgesehen, vorzugsweise mit dem Dichtkolbengehäuse (8) verbunden, ist und/oder dass die ausgangsseitige Dichtfläche (17) durch Dichtelemente (18), vorzugsweise O-Ringe, im Dichtkolbengehäuse (8) geführt ist.

9. Handventil nach einem der vorhergehenden Ansprüche, **dadurch gekennzeichnet, dass** der Dichtkolben (4) eine ausgangsseitige zylindrische Dichtfläche (17) und/oder eine eingangsseitige zylindrische Dichtfläche (19) an seiner Außenkontur aufweist.

10. Handventil nach den Ansprüchen 8 und 9, **dadurch gekennzeichnet, dass** die eingangsseitige Dichtfläche (19) über ein Dichtelement (20), vorzugsweise einen O-Ring, in einem Gehäuse, insbesondere im Eingangsgehäuse (15), geführt ist.

11. Handventil nach einem der vorhergehenden Ansprüche, **dadurch gekennzeichnet, dass** ein Dämpfer (21) zur Dämpfung der Geschwindigkeit des Schließvorgangs des Handventils (1) vorgesehen ist, insbesondere wobei der Dämpfer (21) dem Gehäuse (22) und/oder dem Betätigungselement (5) zugeordnet, insbesondere in das Gehäuse (22) und/oder Betätigungselement (5) integriert, ist und/oder insbesondere wobei das Handventil (1) derart gestaltet ist, dass der Dichtkolben (4) ein Bestandteil des Dämpfers (21) ist.

12. Handventil nach einem der vorhergehenden Ansprüche, **dadurch gekennzeichnet, dass** das Handventil (1) selbstschließend ausgebildet ist, vorzugsweise gedämpft selbstschließend.

13. Handventil nach einem der vorhergehenden Ansprüche, **dadurch gekennzeichnet, dass** ein Rückstellelement (23) zum Schließen des Handventils (1) vorgesehen ist, insbesondere wobei das Rückstellelement (23), vorzugsweise ringförmig, um den Dichtkolben (4) angeordnet ist und/oder insbesondere wobei das Rückstellelement (23) eine, vorzugsweise eine Mehrzahl, Federn (24) aufweist, die insbesondere um den Umfang des Dichtkolbens (4) verteilt angeordnet sind.

14. Handventil nach einem der vorhergehenden Ansprüche, **dadurch gekennzeichnet, dass** der Dichtkolben (4) druckausgeglichen ausgebildet ist.

15. Verwendung einer Reinigungsvorrichtung, insbesondere zur Reinigung von Oberflächen und Behältnissen in der Lebensmittelindustrie, mit einem Handventil (1) gemäß einem der voranstehenden Ansprüche, vorzugsweise wobei mit dem Handventil (1) eine Abgabe einer unter Druck stehenden Reinigungsflüssigkeit gesteuert wird.

## Claims

1. Manual valve (1), particularly for cleaning in the food industry, with a longitudinal extension direction (X), an inlet (2) for a fluid and an outlet (3) for the fluid, wherein the inlet (2) and the outlet (3) are arranged on opposite ends of the manual valve (1) along the longitudinal extension direction (X),
wherein the manual valve (1) comprises a sealing piston (4), wherein the sealing piston (4) is movable along the longitudinal extension direction (X) for the opening and/or closing of the manual valve (1) and/or wherein the fluid can flow through the sealing piston (4) in the open position of the manual valve (1), preferably along the longitudinal extension direction (X), and
wherein an actuating element (5) is provided for actuating the manual valve (1), **characterised in**
**that** the actuating element (5) engages the sealing piston (4) with rollers as sliding elements (10), such that a low-friction gliding of the actuating element (5) on a sliding surface (9) of the sealing piston (4) is enabled.

2. Manual valve according to claim 1, **characterised in that** a return element (23) is provided for closing the manual valve (1), preferably wherein the return element (23) comprises a plurality of springs (24); and/or
that the actuating element (5) is formed such that it can be gripped together with the manual valve (1).

3. Manual valve according to one of the preceding claims, **characterised in that** the actuating element (5) engages on the sliding surface (9) of the sealing piston (4), preferably on both sides thereof.

4. Manual valve according to one of the preceding claims, **characterised in that** a sealing piston housing (8) is provided for accommodating the sealing piston (4).

5. Manual valve according to claims 2 and 4, **characterised in that** the actuating element (5) is swivelably mounted at the sealing piston housing (8).

6. Manual valve according to claim 4 or 5, **characterised in that** the sealing piston housing (8) is designed to be at least substantially rotationally symmetrical, and/or that the sealing piston housing (8) comprises at least one recess (11), preferably two recesses (11), which recess(es) is/are designed so as to enable the engagement of the actuating element (5) on the sealing piston (4).

7. Manual valve according to one of claims 4 to 6, **characterised in that** the manual valve (1) downstream of the sealing piston housing (8) comprises an outlet housing (12), in particular wherein the valve seat (13) is associated with the outlet housing (12), in particular is formed thereon, and/or in particular wherein a valve seat seal (14) is provided which is preferably associated with the outlet housing (12).

8. Manual valve according to one of claims 4 to 7, **characterised in that** an inlet housing (15) is provided upstream of the sealing piston housing (8), preferably being connected to the sealing piston housing (8) and/or that the outlet-side sealing surface (17) is guided in the sealing piston housing (8) by sealing elements (18), preferably O-rings.

9. Manual valve according to one of the preceding claims, **characterised in that** the sealing piston (4) comprises an outlet-side cylindrical sealing surface (17) and/or an inlet-side cylindrical sealing surface (19) on the outer contour thereof.

10. Manual valve according to claims 8 and 9, **characterised in that** the inlet-side sealing surface (19) is guided via a sealing element (20), preferably an O-ring, in a housing, in particular in the inlet housing (15).

11. Manual valve according to one of the preceding claims, **characterised in that** a damper (21) is provided for damping the speed of the closing process of the manual valve (1), in particular wherein the damper (21) is associated with the housing (22) and/or the actuating element (5), in particular is integrated into the housing (22) and/or actuating element (5), and/or in particular wherein the manual valve (1) is designed such that the sealing piston (4) is a component of the damper (21).

12. Manual valve according to one of the preceding claims, **characterised in that** the manual valve (1) is formed to be self-closing, preferably damped self-closing.

13. Manual valve according to one of the preceding claims, **characterised in that** a return element (23) is provided for the closing of the manual valve (1), in particular wherein the return element (23) is arranged around the sealing piston (4), preferably annularly, and/or in particular wherein the return element (23) comprises one, preferably a plurality of springs (24), in particular arranged to be distributed around the periphery of the sealing piston (4).

14. Manual valve according to one of the preceding claims, **characterised in that** the sealing piston (4) is formed to be pressure balanced.

15. Use of a cleaning apparatus, in particular for the cleaning of surfaces and containers in the food industry, with a manual valve (1) according to one of the preceding claims, preferably wherein a delivery of a pressurised cleaning liquid is controlled with the manual valve (1).

## Revendications

1. Soupape manuelle (1), en particulier pour les travaux de nettoyage dans le domaine alimentaire, avec une direction d'extension longitudinale (X), une entrée (2) pour un fluide et une sortie (3) pour le fluide, l'entrée (2) et la sortie (3) étant disposées au niveau des extrémités opposées de la soupape manuelle (1) le long de la direction d'extension longitudinale (X),
la soupape manuelle (1) présentant un piston d'étanchéité (4), le piston d'étanchéité (4) étant mobile pour ouvrir et/ou fermer la soupape manuelle (1) le long de la direction d'extension longitudinale (X) et/ou le piston d'étanchéité (4) étant susceptible d'être parcouru dans la position d'ouverture de la soupape manuelle (1) par le fluide, de préférence le long de la direction d'extension longitudinale (X) et
un élément d'actionnement (5) étant prévu afin d'actionner la soupape manuelle (1),
**caractérisée**
**en ce que** l'élément d'actionnement (5) venant en prise avec des rouleaux en guise d'éléments de glissement (10) sur le piston d'étanchéité (4), de sorte qu'un glissement à faible friction de l'élément d'actionnement (5) soit possible sur une surface de glissement (9) du piston d'étanchéité (4).

2. Soupape manuelle selon la revendication 1, **caractérisée en ce qu'**un élément de rappel (23) est prévu pour la fermeture de la soupape manuelle (1), de préférence dans laquelle l'élément de rappel (23) présente une pluralité de ressorts (24) ; et/ou
**en ce que** l'élément d'actionnement (5) est conçu de sorte qu'il puisse être enserré conjointement avec la soupape manuelle (1).

3. Soupape manuelle selon une des revendications précédentes, **caractérisée en ce que** l'élément d'actionnement (5) vient en prise sur la surface de glissement (9) du piston d'étanchéité (4), de préférence des deux côtés.

4. Soupape manuelle selon une des revendications précédentes, **caractérisée en ce qu'**un boîtier de piston d'étanchéité (8) est prévu pour la réception du piston d'étanchéité (4).

5. Soupape manuelle selon les revendications 2 et 4, **caractérisée en ce que** l'élément d'actionnement (5) est placé de façon pivotante sur le boîtier de piston d'étanchéité (8).

6. Soupape manuelle selon la revendication 4 ou 5, **caractérisée en ce que** le boîtier de piston d'étanchéité (8) est conçu au moins essentiellement à symétrie de révolution et/ou **en ce que** le boîtier de piston d'étanchéité (8) présente au moins une encoche (11), de préférence deux encoches (11), qui est/sont conçues de manière à permettre la mise en prise de l'élément d'actionnement (5) sur le piston d'étanchéité (4).

7. Soupape manuelle selon une des revendications 4 à 6, **caractérisée en ce que** la soupape manuelle (1) présente, en aval du boîtier de piston d'étanchéité (8), un boîtier de sortie (12), en particulier dans laquelle le siège de soupape (13) est associé au boîtier de sortie (12), en particulier formé sur celui-ci et/ou en particulier dans laquelle un joint de siège de soupape (14) est prévu, qui est de préférence associé au boîtier de sortie (12).

8. Soupape manuelle selon une des revendications 4 à 7, **caractérisée en ce qu'**un boîtier d'entrée (15) est prévu en amont du boîtier de piston d'étanchéité (8), de préférence relié au boîtier de piston d'étanchéité (8) et/ou **en ce que** la surface d'étanchéité (17) côté sortie est guidée par le biais d'éléments d'étanchéité (18), de préférence des joints toriques, dans le boîtier de piston d'étanchéité (8).

9. Soupape manuelle selon une des revendications précédentes, **caractérisée en ce que** le piston d'étanchéité (4) présente une surface d'étanchéité (17) cylindrique côté sortie et/ou une surface d'étanchéité (19) cylindrique côté entrée sur son contour externe.

10. Soupape manuelle selon les revendications 8 et 9, **caractérisée en ce que** la surface d'étanchéité (19) côté entrée est guidée, par le biais d'un élément d'étanchéité (20), de préférence un joint torique, dans un boîtier, en particulier dans le boîtier d'entrée (15).

11. Soupape manuelle selon une des revendications précédentes, **caractérisée en ce qu'**un amortisseur (21) destiné à amortir la vitesse du processus de fermeture de la soupape manuelle (1) est prévu, en particulier dans laquelle l'amortisseur (21) est associé au boîtier (22) et/ou à l'élément d'actionnement (5), en particulier intégré dans le boîtier (22) et/ou l'élément d'actionnement (5) et/ou en particulier dans laquelle la soupape manuelle (1) est conçue de sorte que le piston d'étanchéité (4) forme une partie de l'amortisseur (21).

12. Soupape manuelle selon une des revendications précédentes, **caractérisée en ce que** la soupape manuelle (1) est conçue à fermeture automatique, de préférence à fermeture automatique amortie.

13. Soupape manuelle selon une des revendications précédentes, **caractérisée en ce qu'**un élément de rappel (23) est prévu pour la fermeture de la soupape manuelle (1), en particulier dans laquelle l'élément de rappel (23), de préférence annulaire, est disposé autour du piston d'étanchéité (4) et/ou en particulier dans laquelle l'élément de rappel (23) présente un ressort (24), de préférence une pluralité de ressorts, qui sont en particulier disposés répartis sur la périphérie du piston d'étanchéité (4).

14. Soupape manuelle selon une des revendications précédentes, **caractérisée en ce que** le piston d'étanchéité (4) est formé de manière équilibrée en pression.

15. Utilisation d'un dispositif de nettoyage, en particulier pour le nettoyage de surfaces et contenants dans le domaine alimentaire, comprenant une soupape manuelle (1) selon une des revendications précédentes, de préférence dans laquelle une distribution d'un fluide de nettoyage se trouvant sous pression est commandée avec la soupape manuelle (1).
